# FASCICULE DE BREVET EUROPEEN

(11) **EP 1 816 021 B1**
(45) Date de publication et mention de la délivrance du brevet: **09.04.2014**
(21) Numéro de dépôt: 07290117.6
(22) Date de dépôt: 30.01.2007
(51) Int. Cl.: B60J 10/00, B60J 10/08

(54) **Joint d'étanchéité dans le domaine de l'industrie automobile**
Dichtungsfuge im Bereich der Automobilindustrie
Watertight seal for the car industries

(30) Priorité: 01.02.2006 FR 0600899
(43) Date de publication de la demande: 08.08.2007
(73) Titulaire: HUTCHINSON, 75008 Paris (FR)
(72) Inventeur: Tessier, Bernard, 45270 Moulon (FR); Lebrize, Christophe, 45340 Juranville (FR); Devaux, Philippe, 38140 La Murette (FR); André, Sylvain, 38320 Eybens (FR)
(74) Mandataire: Bolinches, Michel Jean-Marie

(56) Documents cités:
- WO-A1-2005/037587
- DE-A1- 3 412 312
- FR-A3- 2 602 193
- JP-A- 2001 341 590
- US-A- 4 143 497
- US-B1- 6 244 601
- US-B2- 6 942 225

## Description

L'invention concerne un joint d'étanchéité dans le domaine de l'industrie automobile pour éviter notamment des phénomènes de fuite de type "syphonnage" ou "infiltration".

D'une manière générale, dans le domaine de l'industrie automobile, on utilise des joints d'étanchéité dont la fixation est assurée par une partie du joint formant une pince qui est par exemple chaussée sur une feuillure. Or, de tels joints sont particulièrement exposés à des entrées d'eau dites de "syphonnage", lorsqu'ils forment par exemple des joints de hayons, de coffres ou de custodes mobiles. Plus précisément, l'eau ruisselle le long du périmètre extérieur du joint et parvient à s'infiltrer dans l'habitacle du véhicule, le coffre ou la zone à étancher via le fond de la pince, notamment aux endroits où la ou les feuillures présentent des variations d'épaisseur ou de planéité.

Pour pallier ces entrées d'eau, il est connu d'avoir recours à une barrière d'étanchéité, tel qu'un cordon de mousse polyuréthane très déformable comme décrit dans le document US-4,949,524 ou, le plus souvent, à un cordon ou film en mastic comme décrit dans le document FR-2 633 233, qui est fixée dans le fond de la pince de fixation. Or, l'expérience montre que le recours à un cordon de mousse polyuréthane n'est pas une solution pérenne du fait d'une trop forte déformation permanente après mise en compression, et que le recours à un cordon ou film en mastic entraîne notamment des problèmes de salissures et/ou de pollution des feuillures, ce qui nécessite de procéder à un nettoyage si une partie du joint est déchaussée lors du montage. Par ailleurs, en service après-vente, lorsqu'il faut remplacer le joint et donc le déchausser complètement de la feuillure, on est contraint de nettoyer la feuillure souillée par le mastic à l'aide d'un solvant avant de remonter un joint neuf. Enfin, un cordon de mastic est très pénible à manipuler car il est visqueux, collant et pollue tous les éléments avec lesquels il entre en contact lors des phases de finition (lame de tronçonnage, couteau de découpe, forêt de perçage, rivet, etc.).

Le document US-A-4,143,497 présente un joint d'étanchéité par exemple de coffre pour véhicule automobile, le joint présentant une pince en U de fixation sur une feuillure pourvue en son fond d'une barrière d'étanchéité formée du même matériau dur ou de haute densité que celui du fond de pince.

Le document WO-A1-2005/037587 présente un joint d'étanchéité selon le préambule de la revendication 1 annexée à la présente description.

Un but de l'invention est de concevoir un nouveau type de joint d'étanchéité dans le domaine de l'industrie automobile qui ne présente pas les inconvénients de l'art antérieur évoqué précédemment tout en présentant d'autres avantages.

A cet effet, l'invention propose un joint d'étanchéité pour véhicule automobile choisi dans le groupe constitué par les joints de hayon, de coffre et de custode mobile, le joint comportant au moins une zone destinée à être mise en contact par une barrière d'étanchéité avec un support de réception formé d'une feuillure d'un encadrement de baie pour un panneau mobile, le joint présentant une pince de fixation qui forme ladite zone et qui présente une section droite sensiblement en forme de U présentant un fond et deux jambes latérales, ladite zone étant à base d'un terpolymère éthylène/propylène/diène monomère (EPDM) ou d'un élastomère thermoplastique de type mélange d'une polyoléfine et d'un caoutchouc.

Un tel joint selon l'invention est caractérisé en ce que ladite barrière d'étanchéité est fixée dans ledit fond de la pince et comprend une composition de caoutchouc à base d'au moins un élastomère thermoplastique styrénique de type compact présentant une dureté Shore A, mesurée selon la norme ASTM D 2240, qui est inférieure ou égale à 20.

On notera que l'élastomère thermoplastique qui est utilisé pour la barrière d'étanchéité est spécifiquement de type compact, n'étant donc pas par définition de type caoutchouc mousse (i.e. cellulaire ou alvéolaire) contrairement aux cordons en mousse précités de l'état antérieur de la technique, ce qui permet notamment à la barrière d'étanchéité de présenter une déformation permanente minimisée après mise en compression.

De préférence, ledit élastomère thermoplastique présente une dureté Shore A sensiblement égale à 0.

Egalement à titre préférentiel, ledit élastomère thermoplastique peut être un élastomère thermoplastique styrénique, tel qu'un copolymère à blocs styrène/éthylène/butylène/styrène (SEBS) ou à blocs styrène/éthylène/propylène/styrène (SEPS), et la barrière peut être coextrudée sur la zone du joint destinée à être mise en contact avec le support de réception.

D'une manière générale, la zone du joint destinée à être mise en contact avec le support de réception qui est à base d'un terpolymère éthylène/propylène/diène monomère (EPDM) ou d'un élastomère thermoplastique (TPO ou TPV) de type mélange d'une polyoléfine et d'un caoutchouc, tel qu'un EDPM, est réalisée en un matériau qui est compatible avec celui constituant la barrière d'étanchéité.

Le joint selon l'invention est avantageusement tel que ladite barrière d'étanchéité est fixée dans le fond de la pince, avec la forme d'une voûte par exemple, par une opération de coextrusion.

Le matériau de la barrière d'étanchéité selon l'invention présente de nombreux avantages parmi lesquels il faut notamment citer :
- une compatibilité avec des matériaux tels que EPDM et thermoplastiques élastomères qui peuvent constituer un support de réception du matériau selon l'invention avec une possibilité d'extrusion avec ces matériaux ;
- un matériau légèrement collant mais non polluant vis-à-vis d'outils de production tels que des vis extrudeuses, des moules de jonction ou des outils de découpe ; et
- l'absence de tout phénomène de pollution du support de réception.

D'autres avantages, caractéristiques et détails de l'invention ressortiront du complément de description qui va suivre en référence au dessin annexé, donné uniquement à titre d'exemple et dans lequel :

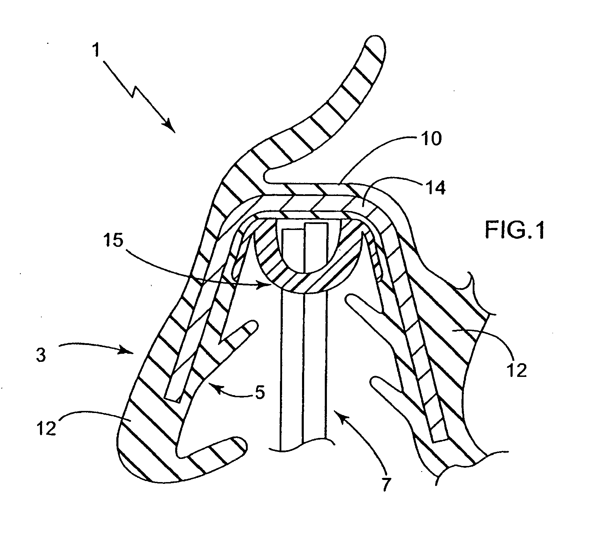

- la figure 1 est une vue en coupe d'un joint d'étanchéité selon l'invention dans le domaine de l'industrie automobile.

Le joint 1 tel qu'illustré à la figure 1 est un joint utilisable dans l'industrie automobile pour former un joint de hayon, de coffre ou de custode mobile.

Le joint 1 comprend une partie de fixation 3 avec une section droite globalement en U formant une pince 5 qui est destinée à venir se chausser sur une feuillure 7. Le joint 1 comprend également une partie d'étanchéité 9, élastiquement déformable qui n'a été que partiellement représentée car elle dépend essentiellement du type de joint considéré.

L'invention concerne notamment l'étanchéité entre la pince 5 du joint 1 et la feuillure 7, c'est-à-dire sur une partie du joint 1 qui est confrontée à des entrées d'eau dites de "syphonnage", c'est-à-dire que l'eau de pluie ruisselant le long du périmètre extérieur du joint parvient à s'infiltrer dans l'habitacle du véhicule, le coffre ou la zone à étancher via le fond de la pince 5, notamment aux endroits où la feuillure 7 présente de grosses variations d'épaisseur ou de planéité.

Plus précisément, la pince 5 du joint 1 présente un fond 10 qui est bordé de deux jambes latérales 12, avec présence éventuelle d'une armature de renfort 14 qui est noyée dans la pince 5. D'une manière générale, la pince 5 peut être réalisée en un matériau à base d'un terpolymère éthylène/propylène/diène monomère (EPDM) ou d'un élastomère thermoplastique (TPO ou TPV) de type mélange d'une polyoléfine et d'un caoutchouc, tel qu'un EDPM.

Une garniture d'étanchéité 15 est placée dans le fond de la pince 5 et est destinée à assurer l'étanchéité avec la feuillure 7 avec laquelle elle vient en contact. Cette garniture d'étanchéité 15 est une composition de caoutchouc à base d'au moins un élastomère thermoplastique. Cet élastomère thermoplastique peut être du type styrénique et avantageusement un copolymère à blocs styrène/éthylène/butylène/styrène (SEBS) ou à blocs styrène/éthylène/propylène/styrène (SEPS), présentant une dureté Shore A, mesurée selon la norme ASTM D 2240, qui est inférieure ou égale à 40, de préférence inférieure à 20 et avantageusement sensiblement égale à 0.

Une telle garniture d'étanchéité 15 est à la fois souple, légèrement poisseuse, non polluante et molle, et en plus peut être coextrudée dans la zone désirée et à la forme voulue. Dans l'exemple illustré à la figure 1, la garniture d'étanchéité 15 a une forme de voûte par exemple.

## Revendications

1. Joint d'étanchéité pour véhicule automobile choisi dans le groupe constitué par les joints de hayon, de coffre et de custode mobile, le joint comportant au moins une zone (3) destinée à être mise en contact par une barrière d'étanchéité (15) avec un support de réception (7) formé d'une feuillure d'un encadrement de baie pour un panneau mobile, le joint présentant une pince de fixation (5) qui forme ladite zone et qui présente une section droite sensiblement en forme de U présentant un fond (10) et deux jambes latérales (12), ladite zone étant à base d'un terpolymère éthylène/propylène/diène monomère (EPDM) ou d'un élastomère thermoplastique de type mélange d'une polyoléfine et d'un caoutchouc, **caractérisé en ce que** ladite barrière d'étanchéité (15) est fixée dans ledit fond de la pince et comprend une composition de caoutchouc à base d'au moins un élastomère thermoplastique styrénique de type compact présentant une dureté Shore A, mesurée selon la norme ASTM D 2240, qui est inférieure ou égale à 20.

2. Joint d'étanchéité selon la revendication 1, dans lequel ledit élastomère thermoplastique présente une dureté Shore A sensiblement égale à 0.

3. Joint d'étanchéité selon la revendication 1 ou 2, dans lequel ledit élastomère thermoplastique styrénique est un copolymère à blocs styrène/éthylène/butylène/styrène (SEBS).

4. Joint d'étanchéité selon la revendication 1 ou 2, dans lequel ledit élastomère thermoplastique styrénique est un copolymère à blocs styrène/éthylène/propylène/styrène (SEPS).

5. Joint d'étanchéité selon une des revendications précédentes, dans lequel la barrière d'étanchéité (15) est coextrudée sur la zone du joint (3) destinée à être mise en contact avec le support de réception (7).

6. Joint d'étanchéité selon une des revendications précédentes, dans lequel la barrière d'étanchéité (15) a la forme d'une voûte.

## Patentansprüche

1. Dichtung für ein Kraftfahrzeug, die aus der aus Dichtungen für Heckklappen, Kofferräume und bewegliche hintere Seitenfenster bestehenden Gruppe ausgewählt ist, wobei die Dichtung mindestens einen Bereich (3) aufweist, der dazu vorgesehen ist, über eine Abdichtsperre (15) mit einem Aufnahmeträger (7) in Kontakt gebracht zu werden, welcher aus einem Anschlag eines Öffnungsrahmens für ein bewegliches Panel gebildet ist, wobei die Dichtung eine Befestigungsklemme (5) aufweist, die den Bereich bildet und einen im Wesentlichen U-förmigen Querschnitt mit einem Boden (10) und zwei Seitenschenkeln (12) aufweist, wobei der Bereich auf Basis eines Ethylen-Propylen-Dien-Monomer-(EPDM-)Terpolymers oder eines thermoplastischen Elastomers vom Typ Gemisch aus einem Polyolefin und einem Kautschuk hergestellt ist, **dadurch gekennzeichnet, dass** die Abdichtsperre (15) im Boden der Klemme befestigt ist und eine Kautschukzusammensetzung auf Basis mindestens eines kompakten thermoplastischen Styrolelastomers mit einer Shore-A-Härte von kleiner oder gleich 20 aufweist, welche gemäß der Norm ASTM D 2240 gemessen ist.

2. Dichtung nach Anspruch 1, bei der das thermoplastische Elastomer eine Shore-A-Härte aufweist, die im Wesentlichen 0 beträgt.

3. Dichtung nach Anspruch 1 oder 2, bei der das thermoplastische Styrolelastomer ein Copolymer mit Styrol-Ethylen-Butylen-Styrol-Blöcken (SEBS-Blöcken) ist.

4. Dichtung nach Anspruch 1 oder 2, bei der das thermoplastische Styrolelastomer ein Copolymer mit Styrol-Ethylen-Propylen-Styrol-Blöcken (SEPS-Blöcken) ist.

5. Dichtung nach einem der vorhergehenden Ansprüche, bei der die Abdichtsperre (15) auf dem Bereich der Dichtung (3) koextrudiert ist, der dazu vorgesehen ist, mit dem Aufnahmeträger (7) in Kontakt gebracht zu werden.

6. Dichtung nach einem der vorhergehenden Ansprüche, bei der die Abdichtsperre (15) die Form einer Wölbung hat.

## Claims

1. A sealing gasket for automotive vehicle selected from the group consisting of gaskets for tailgates, for trunks and for moving rear quarter panels, the gasket comprising at least one zone (3) designed to be put into contact via a sealing barrier (15) with a gasket-receiver support (7) formed by a rabbet of a frame surrounding a recess for a moving panel, the gasket having a fastener clamp (5) which forms said zone and which has a substantially U-shaped cross-section presenting a web (10) and two lateral flanges (12), said zone being based on a terpolymer of ethylene/propylene/diene monomer (EPDM), or on a thermoplastic elastomer of the type comprising a mixture of a polyolefin and a rubber, **characterized in that** said sealing barrier (15) is fixed to said web of the clamp and comprises a rubber composition based on at least one styrene thermoplastic elastomer of compact type presenting a hardness on the Shore A scale, measured using the ASTM D 2240 standard, that is less than or equal to 20.

2. A sealing gasket according to claim 1, wherein said thermoplastic elastomer presents a hardness on the Shore A scale that is substantially equal to 0.

3. A sealing gasket according to claim 1 or 2, wherein said styrene thermoplastic elastomer is a styrene/ethylene/butylene/styrene (SEBS) block copolymer.

4. A sealing gasket according to claim 1 or 2, wherein said styrene thermoplastic elastomer is a styrene/ethylene/propylene/styrene (SEPS) block copolymer.

5. A sealing gasket according to one of the preceding claims, wherein the sealing barrier is co-extruded on the zone of the gasket (3) that is designed to come into contact with the gasket-receiver support (7).

6. A sealing gasket according to one of the preceding claims, wherein the sealing barrier (15) is of arched shape.
